# FASCICULE DE BREVET EUROPEEN

(11) **EP 0 351 263 B1**
(45) Date de publication et mention de la délivrance du brevet: **12.02.1997**
(21) Numéro de dépôt: 89401740.9
(22) Date de dépôt: 20.06.1989
(51) Int. Cl.: H01J 23/04, H01J 1/30

(54) **Structure de source d'électrons et application aux tubes d'émission d'ondes électromagnétiques**
Elektronenquellenstruktur und ihre Anwendung bei Röhren zur Erzeugung elektromagnetischer Wellen
Electron source structure and its use in tubes emitting electromagnetic waves

(30) Priorité: 05.07.1988 FR 8809064
(43) Date de publication de la demande: 17.01.1990
(73) Titulaire: THOMSON-CSF, 75008 Paris (FR)
(72) Inventeur: Weisbuch, Claude, F-92045 Paris la Défense (FR); Epsztein, Bernard, F-92045 Paris la Défense (FR)

(56) Documents cités:
- EP-A- 0 257 460
- US-A- 2 960 659
- US-A- 3 056 073
- US-A- 3 334 248
- US-A- 3 447 045
- INTERNATIONAL ELECRON DEVICES MEETING, Washington, DC, 1-4 décembre 1985, pages 342-345, IEEE, New York, US; M. SCRADER et al.: "Pre-bunched beam devices - efficient sources of UHF and microwave power"

## Description

La présente invention concerne la structure des sources d'électrons et, à titre d'application, les tubes d'émission d'ondes électromagnétiques de très hautes fréquences et de grande puissance.

Dans de nombreux domaines, il est nécessaire de pouvoir produire des faisceaux d'électrons dont l'énergie est utilisée pour la production de phénomènes secondaires, par exemple l'émission d'ondes électromagnétiques. Tel est le cas des tubes hyperfréquences qui entrent couramment dans la constitution des systèmes électroniques de commande, par exemple ceux des radars.

Actuellement, la source qui produit un faisceau d'électrons dans de tels tubes est composée d'une cathode thermoionique portée à température, notamment par effet Joule. Cette technique permet de produire assez facilement des électrons avec une densité souhaitée, mais elle présente néanmoins un inconvénient dans le cas où il est nécessaire de moduler cette densité d'électrons. En effet, pour obtenir cette modulation, il est nécessaire alors d'associer aux cathodes des électrodes annexes bien connues très schématiquement constituées par des grilles sur lesquelles sont appliquées des potentiels électriques variables. Les performances de ces sources sont rapidement limitées dès que la fréquence dépasse 1 MHz, en raison des temps de transit.

Des solutions ont été proposées pour tenter de pallier les inconvénients mentionnés ci-dessus. L'une d'elles est le lasertron qui utilise l'effet photoélectrique. Une impulsion laser incidente, modulée à la fréquence désirée, excite le courant d'électrons par photoémission à partir d'une cathode ayant de bonnes propriétés photoémissives. Cette solution nécessite un laser modulé à très haute fréquence et une cathode ayant des propriétés photoémissives très stables. Ces conditions rendent une telle source peu utilisable dans le domaine industriel, du fait de sa complexité et de son prix de revient élevé.

Comme solution, il a aussi été proposé un solide à base de matériaux semiconducteurs essentiellement constitué de deux couches de matériaux comme de l'Arséniure de Gallium à deux dopages différents, entre lesquelles est appliquée une tension électrique. L'une des deux couches permet de libérer une certaine quantité d'électrons qui sont alors soumis au champ électrique créé par la tension électrique. Ils sont donc accélérés pour tomber ensuite sur la seconde couche qui permet leur multiplication. Lorsqu'ils ont acquis une énergie suffisante, ils sont éjectés du solide, particulièrement par la seconde couche dont le rôle d'extraction est accentué par l'apport d'une couche additionnelle sur sa face externe, par exemple du Césium ou de l'Oxyde de Césium. Cette couche additionnelle a pour but d'abaisser l'affinité électronique du semiconducteur et tous les électrons arrivant dans cette zone de conduction peuvent ainsi avoir assez d'énergie pour s'extraire de la seconde couche et donc du solide.

Cependant, cette dernière solution ne permet qu'une extraction d'électrons continue ou modulée à basse fréquence, mais rend toujours impossible une modulation rapide de la quantité d'électrons éjectés, pour obtenir, notamment dans le cas des sources d'électrons pour les tubes hyperfréquences, des "paquets" successifs d'électrons permettant de créer des ondes électromagnétiques modulées.

On trouvera une illustration de ces techniques dans les documents EP 0 257 460 et US 2 960 659.

La présente invention a pour but de pallier les inconvénients mentionnés ci-dessus et de proposer une source d'électrons d'une structure simple, et utilisable dans de nombreux domaines, telle que son prix de revient en fasse un produit industriel de grande diffusion, et surtout qui puisse délivrer une quantité d'électrons très facilement modulable.

Plus précisément, la présente invention a pour objet un tube générateur hyperfréquence comportant une enceinte sous vide comprenant :
- une source d'électrons comportant un solide comprenant une première couche semi-conductrice apte à libérer des électrons sous l'action d'un champ électrique et des moyens pour rendre au moins l'une de ses faces partiellement transparente à au moins une partie desdits électrons libérés et permettre à cette partie d'électrons d'être éjectée dudit solide, ledit solide comportant en outre, entre ladite première couche et sa face au moins partiellement transparente et au contact de ladite première couche, une deuxième couche composite semi-conductrice instable ayant une structure à résistance différentielle négative, et que la source d'électrons comporte des moyens pour former avec ladite première couche et ladite couche composite une cavité résonnante électrique ; ledit solide comportant en outre une troisième couche de matériau semi-conducteur disposée au contact de ladite deuxième couche et que ladite source comporte des moyens pour appliquer, entre lesdites deuxième et troisième couches, une tension d'amplification par avalanche du nombre d'électrons libérés à partir desdites première et deuxième couches, la face partiellement transparente étant située dans l'enceinte sous vide ;
- un circuit d'entrée hyperfréquence couplé à la source d'électrons.

D'autres caractéristiques et avantages de la présente invention apparaîtront au cours de la description suivante donnée en regard des dessins annexés à titre illustratif, mais nullement limitatif, dans lesquels :
- la figure 1 représente un mode de réalisation d'une source d'électrons selon l'invention, et
- la figure 2 représente un exemple d'application de la source selon l'invention comme cathode d'émission d'électrons dans un tube hyperfréquence.

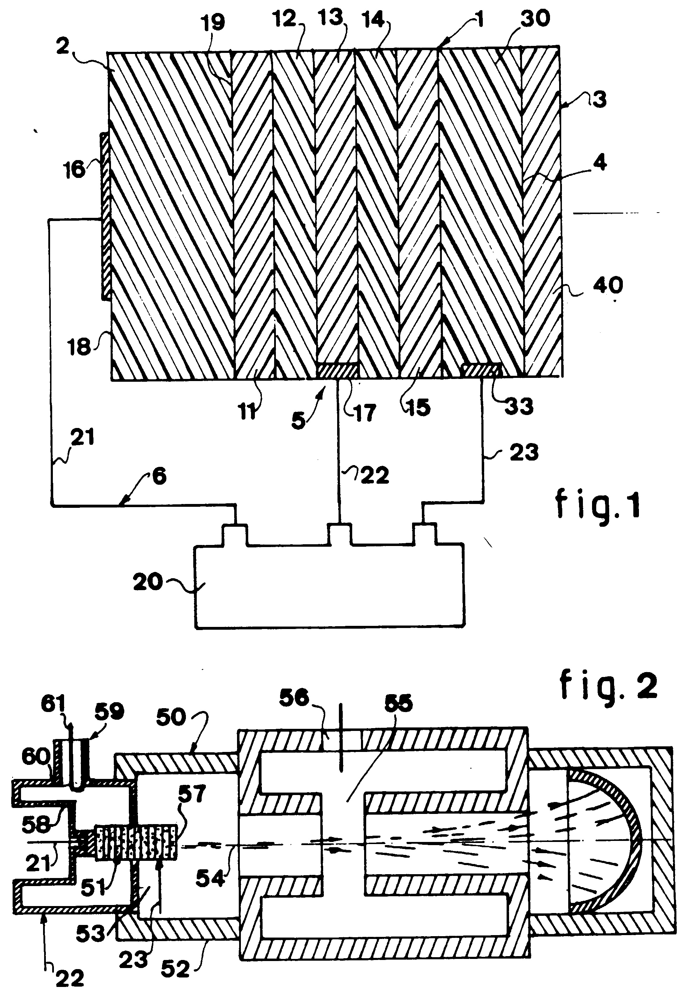

La source d'électrons illustrée sur la figure 1 comprend un solide 1 comportant une première couche semiconductrice 2 apte à libérer des électrons sous l'action d'un champ électrique et des moyens 3 pour rendre au moins l'une de ses faces 4 partiellement transparente à au moins une partie des électrons libérés et permettre à cette partie d'électrons d'être éjectée du solide.

Ce solide comporte en outre, entre la première couche 2 et la face 4 au moins partiellement transparente, au contact de cette première couche, une deuxième couche composite semiconductrice 5 instable ayant une structure à résistance différentielle négative. La source comporte en outre des moyens 6 pour former avec la première couche 2 et la deuxième couche 5 composite une cavité résonnante électrique.

La deuxième couche composite semiconductrice 5 instable ayant une résistance différentielle négative est par exemple d'une structure à double-barrière à effet tunnel résonnant ou d'une structure avec effet d'avalanche et contrôle du temps de transit, qui permet de délivrer, en régime dynamique, une résistance différentielle qui amène à des oscillations de courant de très haute fréquence. Ces structures sont avantageusement constituées, par exemple, d'un- empilage d'une pluralité de couches secondaires de matériaux semiconducteurs du type p⁺. Cette pluralité de couches secondaires est avantageusement, comme illustré, au nombre de cinq, 11, 12, 13, 14 et 15. Dans ce cas les cinq couches secondaires sont respectivement constituées, pour les couches d'ordre un 11, trois 13 et cinq 15, par de l'Arséniure de Gallium, pour les couches d'ordre deux 12 et quatre 14, par de l'Alumino-Arséniure de Gallium.

Dans l'exemple donné, la première couche 2 est de l'Arséniure de Gallium d'une épaisseur d'environ 100 à 1000 µm et les cinq couches secondaires 11-15 ont une épaisseur de l'ordre de 5 nm chacune.

Comme mentionné ci-avant, la source comporte des moyens 6 pour former, avec la première couche et la couche composite, une cavité résonnante électrique. Ces moyens comportent par exemple deux électrodes 16, 17 respectivement situées, d'une part sur la face 18 de la première couche 2 opposée à celle 19 qui est au contact de la couche composite 5, et d'autre part, sur cette couche composite, par exemple sur la couche secondaire 13 d'ordre trois définie ci-avant. Ces deux électrodes 16, 17 sont aptes à être réunies à une source d'énergie électrique 20 pour fermer la cavité résonnante électrique. A titre d'exemple, le potentiel électrique appliqué entre ces deux électrodes 16, 17 est d'environ 1,5 volt.

Ces électrodes sont par exemple constituées par des dépôts de matériaux conducteurs connus en eux-mêmes, essentiellement à base d'or, de nickel, de germanium ou de titane, sur lesquels sont solidarisés des connecteurs électriques 21, 22 aptes à être reliés à la source d'énergie électrique 20.

A la cavité résonnante électrique précédente, peut être associée une cavité résonnante mécanique comme celle qui est représentée sur la figure 2, et qui sera décrite ci-après.

Pour pouvoir avantageusement éjecter une densité importante d'électrons, le solide 1 comporte en outre une troisième couche 30 de matériau semi-conducteur disposée au contact de la deuxième couche composite 5, et la source d'électrons comporte alors des moyens 23 pour appliquer un champ électrique entre la couche composite 5 et cette troisième couche 30, pour produire une amplification du nombre d'électrons par avalanche à partir des électrons libérés au niveau des première 3 et deuxième 5 couches.

Cette troisième couche 30 est une couche semi-conductrice de type n⁺, par exemple d'Arséniure de Gallium. Dans l'exemple de réalisation donné, le champ électrique permettant l'avalanche d'amplification est donné par une tension électrique appliquée entre l'électrode 17 disposée sur la couche secondaire 13 d'ordre trois définie ci-avant et une troisième électrode 33 située sur la troisième couche, la valeur de cette tension étant d'environ 3 volts.

Comme mentionné ci-avant, le solide comporte au moins une face 4 partiellement transparente aux électrons libérés dans sa masse. La transparence de cette face est donnée par une quatrième couche 40 de matériau ayant une affinité électronique négative, déposée sur la face de la troisième couche 30 sensiblement opposée à celle qui est au contact de la deuxième couche 5. Cette quatrième couche 40 est par exemple constituée d'un matériau à base de Césium tel que de l'Oxyde de Césium.

Il est bien évident que l'on peut réaliser une source d'électrons selon l'invention comportant plusieurs solides montés en parallèle, de même structure que celle décrite ci-avant, pour obtenir une surface d'émission électronique d'une valeur donnée, en fonction des besoins de l'application de cette source.

La source d'électrons décrite ci-dessus fonctionne de la façon suivante:

Lorsque le solide 1 de structure définie ci-avant est soumis au potentiel de libération des électrons, en fait une faible tension directe, par exemple de 1,5 volt, des électrons sont libérés dans la première couche 2 et accélérés vers la deuxième couche 5. Comme celle-ci est instable, elle constitue une source oscillante de libération d'électrons par l'effet tunnel bien connu en lui-même. Les électrons arrivent en sortie de cette deuxième couche composite suivant une densité modulée en fonction de la valeur de la fréquence de résonance de la cavité électrique constituée et sur laquelle il est possible d'exercer des variations déterminées.

Quand ces "paquets" successifs d'électrons arrivent sur la face de sortie de la deuxième couche, ils tombent sur la troisième couche 30 et, comme mentionné ci-avant, leur nombre est amplifié par l'effet d'avalanche créé par la tension d'environ 3 volts appliquée entre la face de la troisième couche 30 opposée à celle commune avec la deuxième couche 5 et l'une, 13, des couches secondaires de cette deuxième couche. Les électrons ainsi libérés et accélérés peuvent s'éjecter du solide, d'autant plus qu'ils arrivent au niveau de la quatrième couche 40, par exemple d'Oxyde de Césium, dont le rôle est d'abaisser l'affinité électronique du semi-conducteur, qui, même dans le cas de l'Arséniure de Gallium de type "p" devient négative. Tous les électrons qui passent dans cette zone de conduction peuvent ainsi avoir assez d'énergie pour s'extraire de cette couche, et donc du solide.

Les électrons émis peuvent alors être utilisés pour toutes applications, notamment, et fort avantageusement, comme "cathode" émissive d'électrons dans un tube hyperfréquence. En effet, il est très facile, notamment en modulant la valeur des tensions appliquées, de pouvoir moduler à la même fréquence, et suivant la même forme, les "paquets" d'électrons extraits du solide par sa face présentant la transparence partielle définie ci-avant.

La figure 2 représente schématiquement un tube hyperfréquence 50 utilisant une telle "cathode" 51 comme définie et décrite en regard, notamment, de la figure 1.

Ce tube comprend, dans une enceinte sous vide 52, la source d'électrons 51 décrite ci-avant dont la face émissive 57 partiellement transparente est tournée vers l'intérieur 53 de l'enceinte et dont la direction d'émission 54 est sensiblement tangente à l'ouverture d'entrée 55 d'une anode antenne 56 sur laquelle est appliqué un fort potentiel électrique, par exemple 10 kilovolts, ce qui permet de convertir de façon connue les impulsions d'électrons émis après avoir été accélérés en des ondes électromagnétiques du type hyperfréquences, comme celles qui sont par exemple utilisées dans les circuits d'alimentation des radars ou analogues.

Dans cette réalisation, la source 51 comporte en plus une cavité résonante mécanique 58 munie d'un moyen de couplage 59, notamment une boucle 60 terminant l'extrémité 61 d'un câble coaxial, ce qui permet la synchronisation du type hyperfréquence 50 avec une source extérieure.

## Revendications

1. Tube générateur hyperfréquence comportant une enceinte sous vide (52) caractérisé en ce qu'il comporte notamment
- une source d'électrons (51) comportant un solide (1) comprenant une première couche semi-conductrice (2) apte à libérer des électrons sous l'action d'un champ électrique et des moyens (3) pour rendre au moins l'une de ses faces (4, 57) partiellement transparente à au moins une partie desdits électrons libérés et permettre à cette partie d'électrons d'être éjectée dudit solide, ledit solide comportant en outre, entre ladite première couche (2) et sa face (4) au moins partiellement transparente et au contact de ladite première couche, une deuxième couche (5) composite semi-conductrice instable ayant une structure à résistance différentielle négative, et que la source d'électrons comporte des moyens (6) pour former avec ladite première couche et ladite couche composite une cavité résonnante électrique ; ledit solide comportant en outre une troisième couche (30) de matériau semi-conducteur disposée au contact de ladite deuxième couche (5) et que ladite source comporte des moyens (23) pour appliquer, entre lesdites deuxième (5) et troisième (30) couches, une tension d'amplification par avalanche du nombre d'électrons libérés à partir desdites première (2) et deuxième (5) couches, la face partiellement transparente (57) étant située dans l'enceinte sous vide (52) ;
- un circuit d'entrée hyperfréquence (61) couplé à la source d'électrons (51).

2. Tube selon la revendication 1, caractérisé en ce que le circuit d'entrée hyperfréquence comporte :
- une cavité résonante mécanique (58) qui est connectée à la source d'électrons pour permettre la synchronisation du tube générateur hyperfréquence avec une source extérieur;
- des moyens de couplage (60) entre le câble, la ligne ou le guide d'ondes d'entrée et la cavité résonante.

3. Tube selon la revendication 1, caractérisé en ce qu'il comporte également un circuit (56) d'extraction du signal hyperfréquence couplé à l'enceinte à vide (52).

4. Tube selon la revendication 1, caractérisé par le fait que ladite deuxième couche (5) composite semi-conductrice instable ayant une résistance différentielle négative est choisie parmi les structures à double-barrière à effet tunnel résonnant et à effet d'avalanche à contrôle du temps de transit.

5. Tube selon la revendication 1, caractérisé par le fait que ladite structure est constituée d'un empilage d'une pluralité de couches secondaires (11-15) de matériaux semi-conducteurs du type p⁺.

6. Tube selon la revendication 5, caractérisé par le fait que ladite pluralité de couches secondaires est au nombre de cinq.

7. Tube selon la revendication 5, caractérisé par le fait que les cinq couches secondaires sont respectivement constituées, pour les couches d'ordre un (11), trois (13) et cinq (15), par de l'Arséniure de Gallium, pour les couches d'ordre deux (12) et quatre (14), par de l'Alumino-Arséniure de Gallium.

8. Tube selon l'une des revendications 1 à 7, caractérisé par le fait que lesdits moyens (3) pour rendre au moins une face dudit solide partiellement transparente à au moins une partie desdits électrons libérés dans ledit solide et pour permettre à cette partie d'électrons d'être éjectée dudit solide, sont constitués par une quatrième couche (40) de matériau à affinité électronique négative déposée sur ladite face du solide devant être rendue transparente.

9. Tube selon la revendication 8, caractérisé par le fait que ladite couche de matériau à affinité électronique négative (40) est constituée d'un matériau à base de Césium.

10. Tube selon l'une des revendications précédentes, caractérisé par le fait que ladite première couche (2) est constituée d'un matériau semi-conducteur de type n⁺.

11. Tube selon la revendication 10, caractérisé par le fait que ledit matériau semi-conducteur de type n⁺ est de l'Arséniure de Gallium.

12. Tube selon la revendication 1, caractérisé par le fait que ladite troisième couche (30) est une couche semi-conductrice de type n⁺.

13. Tube selon la revendication 12, caractérisé par le fait que ladite troisième couche (30) est constituée par de l'Arséniure de Gallium.

14. Tube selon l'une des revendications précédentes, caractérisé par le fait que la source d'électrons comporte une pluralité de solides montés en parallèle.

## Patentansprüche

1. Röhre zur Erzeugung von Ultrahochfrequenz, die einen evakuierten Kolben (52) aufweist, dadurch gekennzeichnet, daß sie insbesondere aufweist
- eine Elekronenquelle (51), die einen Festkörper (1) aufweist, der eine erste Halbleiterschicht (2) enthält, die unter der Wirkung eines elektrischen Feldes Elektronen freisetzen kann, und Mittel (3), um wenigstens eine von dessen Seiten (4, 57) für wenigstens einen Teil der freigesetzten Elektronen partiell durchlässig zu machen und diesem Teil der Elektronen zu ermöglichen, von dem Festkörper ausgestoßen zu werden, wobei der Festkörper außerdem zwischen der ersten Schicht (2) und seiner wenigstens partiell durchlässigen Seite (4) eine mit der ersten Schicht in Kontakt stehende zweite Schicht (5) aufweist, die eine instabile Halbleiter-Verbundschicht mit einer Struktur mit negativem differentiellem Widerstand ist, und daß die Elektronenquelle Mittel (6) aufweist, um mit der ersten Schicht und der Verbundschicht einen elektrischen Resonanzhohlraum zu bilden, wobei der Festkörper außerdem eine dritte Schicht (30) aus Halbleitermaterial aufweist, welche mit der zweiten Schicht (5) in Kontakt steht, und daß die Quelle Mittel (23) aufweist, um zwischen der ersten Schicht (5) und der dritten Schicht (30) eine Spannung zur Verstärkung durch Lawineneffekt der Anzahl der von der ersten Schicht (2) und der zweiten Schicht (5) freigesetzten Elektronen anzulegen, wobei die partiell durchlässige Seite (57) innerhalb des evakuierten Kolbens (52) angeordnet ist;
- eine Ultrahochfrequenz-Eingangsschaltung (61), die mit der Elektronenquelle (51) gekoppelt ist.

2. Röhre nach Anspruch 1, dadurch gekennzeichnet, daß die Ultrahochfrequenz-Eingangsschaltung enthält:
- einen mechanischen Resonanzhohlraum (58), der mit der Elektronenquelle verbunden ist, um die Synchronisation der Röhre zur Erzeugung von Ultrahochfrequenz mit einer externen Quelle zu ermöglichen;
- Mittel (60) zur Kopplung zwischen dem Eingangskabel, der Eingangsleitung oder dem Eingangswellenleiter und dem Resonanzhohlraum.

3. Röhre nach Anspruch 1, dadurch gekennzeichnet, daß sie eine Schaltung (56) zur Extraktion des Ultrahochfrequenzsignals aufweist, die mit dem evakuierten Kolben (52) gekoppelt ist.

4. Röhre nach Anspruch 1, dadurch gekennzeichnet, daß die zweite Schicht (5), die eine instabile Halbleiter-Verbundschicht mit einem negativen differentiellen Widerstand ist, unter den Strukturen mit einer doppelten Resonanz-Tunneleffekt- und Lawineneffekt-Barriere sowie mit einer Kontrolle der Laufzeit ausgewählt ist.

5. Röhre nach Anspruch 1, dadurch gekennzeichnet, daß die Struktur durch einen Stapel aus mehreren Sekundärschichten (11-15) von Halbleitermaterialien des Typs p⁺ gebildet ist.

6. Röhre nach Anspruch 5, dadurch gekennzeichnet, daß fünf Sekundärschichten vorgesehen sind.

7. Röhre nach Anspruch 5, dadurch gekennzeichnet, daß die fünf Sekundärschichten hinsichtlich der Schichten eins (11), drei (13) und fünf (15) aus Galliumarsenid und hinsichtlich der Schichten zwei (12) und vier (14) aus Galliumaluminiumarsenid bestehen.

8. Röhre nach einem der Ansprüche 1 bis 7, dadurch gekennzeichnet, daß die Mittel (3), um wenigstens eine Seite des Festkörpers für wenigstens einen Teil der von dem Festkörper freigesetzten Elektronen partiell durchlässig zu machen und um diesem Teil der Elektronen zu ermöglichen, von dem Festkörper ausgestoßen zu werden, durch eine vierte Schicht (40) aus einem Material mit negativer Elektronenaffinität gebildet sind, die auf die Seite des Festkörpers aufgebracht ist, die durchlässig gemacht werden soll.

9. Röhre nach Anspruch 8, dadurch gekennzeichnet, daß die Schicht (40) aus Material mit negativer Elektronenaffinität durch ein Material auf der Basis von Caesium gebildet ist.

10. Röhre nach einem der vorhergehenden Ansprüche, dadurch gekennzeichnet, daß die erste Schicht (2) aus einem Halbleitermaterial des Typs n⁺ besteht.

11. Röhre nach Anspruch 10, dadurch gekennzeichnet, daß das Halbleitermaterial des Typs n⁺ Galliumarsenid ist.

12. Röhre nach Anspruch 1, dadurch gekennzeichnet, daß die dritte Schicht (30) eine Halbleiterschicht des Typs n⁺ ist.

13. Röhre nach Anspruch 12, dadurch gekennzeichnet, daß die dritte Schicht (30) aus Galliumarsenid besteht.

14. Röhre nach einem der vorhergehenden Ansprüche, dadurch gekennzeichnet, daß die Elektronenquelle mehrere parallel angebrachte Festkörper aufweist.

## Claims

1. Ultrahigh-frequency generator tube which includes a vacuum chamber (52), characterized in that it includes in particular
- an electron source (51) which includes a solid (1) comprising a semiconductor first layer (2) capable of liberating electrons under the action of an electric field and means (3) for making at least one of its faces (4, 57) partially transparent to at least some of the said liberated electrons and to allow the said some electrons to be ejected from the said solid, the said solid furthermore including, between the said first layer (2) and its at least partially transparent face (4) in contact with the said first layer, an unstable semiconductor composite second layer (5) having a structure exhibiting negative differential resistance, and in that the electron source includes means (6) for forming with the said first layer and the said composite layer an electrical resonant cavity, the said solid furthermore including a third layer (30) of semiconductor material placed in contact with the said second layer (5), and in that the said source includes means (23) for applying, between the said second layer (5) and the said third layer (30), a voltage for multiplying by an avalanche effect the number of electrons liberated from the said first layer (2) and the said second layer (5), the partially transparent face (57) being located in the vacuum chamber (52);
- an ultrahigh-frequency input circuit (61) coupled to the electron source (51).

2. Tube according to Claim 1, characterized in that the ultrahigh-frequency input circuit includes:
- a mechanical resonant cavity (58) which is connected to the electron source in order to allow synchronization of the ultrahigh-frequency generator tube with an external source;
- means of coupling (60) between the input cable, line or waveguide and the resonant cavity.

3. Tube according to Claim 1, characterized in that it also includes a circuit (56) for extracting the ultrahigh-frequency signal coupled to the vacuum chamber (52).

4. Tube according to Claim 1, characterized in that the said unstable semiconductor composite second layer (5) exhibiting a negative differential resistance is chosen from structures having a double barrier operating under a resonant tunnel effect and an avalanche effect and with control of the transit time.

5. Tube according to Claim 1, characterized in that the said structure consists of a stack of a plurality of secondary layers (11-15) of p⁺-type semiconductor materials.

6. Tube according to Claim 5, characterized in that the number of the said plurality of secondary layers is five.

7. Tube according to Claim 5, characterized in that the five secondary layers respectively consist, for the layers of the one (11), three (13) and five (15) kind, of gallium arsenide and for the layers of the two (12) and four (14) kind, of gallium aluminium arsenide.

8. Tube according to one of Claims 1 to 7, characterized in that the said means (3) for making at least one face of the said solid partially transparent to at least some of the said liberated electrons in the said solid and for allowing the said some electrons to be ejected from the said solid consist of a fourth layer (40) of material exhibiting negative electron affinity deposited on the said face of the solid which is to be rendered transparent.

9. Tube according to Claim 8, characterized in that the said layer of material exhibiting negative electron affinity (40)consists of a caesium-based material.

10. Tube according to one of the preceding claims, characterized in that the said first layer (2) consists of an n⁺-type semiconductor material.

11. Tube according to Claim 10, characterized in that the said n⁺-type semiconductor material is gallium arsenide.

12. Tube according to Claim 1, characterized in that the said third layer (30) is an n⁺-type semiconductor layer.

13. Tube according to Claim 12, characterized in that the said third layer (30)consists of gallium arsenide.

14. Tube according to one of the preceding claims, characterized in that the electron source includes a plurality of solids mounted in parallel.
